# EUROPÄISCHE PATENTSCHRIFT

(11) **EP 0 363 959 B1**
(45) Veröffentlichungstag und Bekanntmachung des Hinweises auf die Patenterteilung: **04.08.1993**
(21) Anmeldenummer: 89118983.9
(22) Anmeldetag: 12.10.1989
(51) Int. Cl.: B60T 8/32

(54) **Verfahren zum Regeln des Bremsdruckes in einer blockiergeschützten Fahrzeugbremsanlage**
Brake pressure regulating method for a vehicle antilocking brake arrangement
Procédé de régulation de la pression de freinage dans une installation de freinage de véhicule à antiblocage

(30) Priorität: 14.10.1988 DE 3835095
(43) Veröffentlichungstag der Anmeldung: 18.04.1990
(73) Patentinhaber: LUCAS INDUSTRIES public limited company, Birmingham, B19 2XF West Midlands (GB)
(72) Erfinder: Schmitt, Hubert, D-5405 Ochtendung (DE); Kampfmann, Wolfgang, D-5401 Moselkern (DE)
(74) Vertreter: von Hellfeld, Axel, Dr. Dipl.-Phys.,

(56) Entgegenhaltungen:
- FR-A- 2 374 181
- US-A- 3 756 663

## Beschreibung

Die Erfindung betrifft ein Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Drehverzögerung bei Überschreiten zumindest eines vorgegebenen Schwellenwertes der Bremsdruck normalerweise gesenkt und später wieder erhöht wird.

Bei blockiergeschützten Fahrzeug-Bremsanlagen wird die Drehung der einzelnen Räder des Fahrzeuges ständig verfolgt und insbesondere der Schlupf der gebremsten Räder sowie Ihre Verzögerung ermittelt, um eine Blockierneigung des Rades festzustellen und das Blockieren zu verhindern. Sobald der Radschlupf bzw. die Verzögerung eine Blockierneigung anzeigen, was dadurch festgestellt wird, daß bestimmte, vorgegebene Schwellenwerte bezüglich Schlupf und/oder Verzögerung überschritten werden, wird ein weiterer Anstieg des Druckes in der Bremse des betroffenen Rades beendet oder der Bremsdruck abgebaut.

Im einzelnen werden an dem Kraftfahrzeug die Radgeschwindigkeiten der angetriebenen Räder gemessen und durch Differenzierung dieser Geschwindigkeit wird jeweils für ein einzelnes Rad die Radbeschleunigung bzw. -verzögerung bestimmt. Mit Hilfe der gemessenen Drehgeschwindigkeit wird eine sogenannte Fahrzeugreferenzgeschwindigkeit gebildet, die möglichst nahe an der tatsächlichen Fahrzeuggeschwindigkeit liegen soll. Weicht nun die Drehgeschwindigkeit eines Rades stark von der Referenzgeschwindigkeit ab (sogenannter negativer Schlupf) oder erreicht das Rad Drehverzögerungen, die deutlich größer sind als die maximal physikalisch mögliche Fahrzeugverzögerung (also diejenige Verzögerung, die bei optimalen Reifen und günstiger Fahrbahn mit einer optimalen Bremsung zu erzielen ist), so wird am betreffenden Rad der Bremsdruck abgebaut (üblicherweise durch Öffnung eines Magnetventils), bis das Rad wieder eine Beschleunigung erfährt, die über einem vorgegebenen Schwellenwert liegt.

Die Erfindung setzt diesen Stand der Technik voraus. Die grundlegenden Prinzipien des Aufbaus und der Funktion von blockiergeschützten Fahrzeug-Bremsanlagen können als bekannt vorausgesetzt werden und sind z.B. in "BOSCH TECHNISCHE BERICHTE", Bd. 7, 1980, Heft 2, S. 65 bis 94, beschrieben. Dort ist in Bild 20 ein Antiblockiersystem beschrieben, bei dem die Drehgeschwindigkeit eines Rades gemessen wird. Der Druckabbau beginnt nicht mit dem Überschreiten einer Drehverzögerungsschwelle, sondern erst dann, wenn die Drehgeschwindigkeit des Rades um einen bestimmten Betrag abgenommen hat. Dabei handelt es sich um eine Einzelradregelung.

Es ist auch bekannt, die Regelkanäle von zwei Rädern miteinander zu verbinden, siehe DE 27 57 911 A1, wo bei kritischen Fahrzuständen von einer Einzelradregelung auf eine zwei Rädern gemeinsame Betriebsart "select low" umgeschaltet wird.

Bei der blockiergeschützten Regelung des Bremsdruckes geht es wesentlich darum, über alle Regelzyklen einer Bremsung die Umfangsgeschwindigkeit der gebremsten Räder möglichst im günstigsten Bereich der bekannten Haftbeiwert/Schlupf-Kurve laufen zu lassen.

Es ist im Stand der Technik schon erkannt worden, daß für eine optimale Regelung des Bremsdruckes eine Anpassung des Schwellenwertes an unterschiedliche Gegebenheiten des Systems Fahrbahn/Rad erforderlich ist. So ist zum Beispiel in der DE-OS 33 45 729 berücksichtigt, daß unter bestimmten Bedingungen gebremste Räder ein Drehverhalten zeigen können, das eine starke Drehverzögerung anzeigt, obwohl das Rad noch in einem gut bremsfähigen Zustand läuft. Solche Drehverzögerungen können insbesondere durch Achsschwingungen auftreten und einen instabilen Lauf des Rades vortäuschen und deshalb unerwünschte Regelvorgänge, d.h. einen unerwünschten Abbau des Bremsdruckes, auslösen. Im Stand der Technik wird deshalb zur Unterdrückung solch unerwünschter Regelvorgänge der für die Einleitung der Regelung maßgebliche Schwellenwert nach einem ersten Regelzyklus in Abhängigkeit von der Hochlaufbeschleunigung des geregelten Rades variiert.

Maßgeblich für den bei einer Bremsung erzielbaren kürzesten Bremsweg bei gleichzeitiger Lenkstabilität des Fahrzeuges ist der Haftbeiwert µ zwischen der Fahrbahn und dem Reifen des gebremsten Rades. Der Haftbeiwert wird in der Literatur deshalb auch häufig als "Bremskraftbeiwert" bezeichnet. Der Haftbeiwert µ ist als Funktion des Bremsschlupfes neben vielen Parametern, wie insbesondere der Reifenkonstruktion, dem Reifenprofil, der Aufstandskraft und dem Reifendruck, wesentlich auch von der Fahrbahnbeschaffenheit (ob trocken, naß oder vereist) abhängig.

Bei einer ungestörten Geradeausfahrt des Fahrzeuges sind die Drehgeschwindigkeiten der in Fahrtrichtung links und rechts angeordneten Räder gleich und entsprechen der Referenzgeschwindigkeit.

Wird das Fahrzeug jedoch in eine Kurve gelenkt, so hat das kurvenäußere Rad aufgrund des Radabstandes eine höhere Geschwindigkeit als das Kurveninnere, da es pro Zeiteinheit eine grössere Strecke zurücklegen muß. In Abhängigkeit vom Krümmungsradius der Kurve und von der Geschwindigkeit des Fahrzeuges wird jedoch ein kurveninneres Rad entlastet, d.h. die Aufstandskraft eines kurveninneren Rades ist wesentlich geringer als die eines kurvenäußeren Rades. Somit verringert sich für das kurveninnere Rad die beim Bremsen übertragbare Bremskraft. Aus den gleichen Gründen ändert sich auch beim Antrieb des Fahrzeuges am kurveninneren Rad die übertragbare Antriebskraft.

Gibt der Fahrer bei einer solchen Kurvenfahrt Gas, so kann es aufgrund der Entlastung zu einem Durchdrehen eines kurveninneren Rades kommen, so daß das kurveninnere Rad eine höhere Drehgeschwindigkeit annehmen kann als ein kurvenäußeres Rad. Diese Situation kann insbesondere dann auftreten, wenn der Fahrer plötzlich einem Hindernis ausweichen muß.

Bremst der Fahrer direkt nach dem Durchdrehen des kurveninneren Rades, so fällt zunächst beim Wechsel des Fußes vom Gaspedal zur Bremse die Drehgeschwindigkeit des kurveninneren Rades auf die dem Kurvenradius und der Fahrzeuggeschwindigkeit entsprechende Drehgeschwindigkeit ab. Mit anderen Worten, es kommt zu einer starken Drehverzögerung des kurveninneren Rades. Dies bewertet die ABS-Regelanlage als eine Blockierneigung dieses Rades und somit werden Druckabbausignale erzeugt. Diese Druckabbausignale setzen allerdings viel zu früh ein, da sich das Rad noch nicht in einem Bremsschlupf befindet. Aufgrund des Druckabbaus wird das kurveninnere Rad mit der relativ hohen Drehgeschwindigkeit weiterdrehen und auch keine deutliche Wiederbeschleunigung erfahren, so daß weiterhin Druckabbausignale bezüglich dieses Rades erzeugt werden.

Bei ABS-Anlagen ist, wie bevorzugt auch bei der vorliegenden Erfindung, vorgesehen, daß bei Beginn einer ABS-Regelung mittels eines geeigneten Drosselventils der Druckanstiegsgradient (also die Steigung des Druckanstiegs am Bremszylinder in Abhängigkeit vom Druck im Hauptzylinder) auf einen flachen Wert umgeschaltet wird. Mit anderen Worten: Bei einer Regelung steigt der Bremsdruck im Bremszylinder mit geringerem Gradienten als im Normalfall, d.h. ohne ABS-Regelung. Diese Abflachung des Druckanstiegsgradienten beim ABS-Regeln wird vorgenommen, um ein "Überschießen" des Bremsdruckes über den optimalen Wert zu verhindern und eine möglichst enge Anpassung des tatsächlichen Bremsdruckverlaufes an den idealen Bremsdruckverlauf zu erreichen. Diese Zusammenhänge sind dem Fachmann bekannt und brauchen hier nicht weiter erläutert zu werden.

Diese Abflachung des Druckanstiegsgradienten bei Beginn einer ABS-Regelung führt in der oben beschriebenen Kurvenfahrt dann, wenn das Fahrzeug mit einer Zweikanal-Bremsanlage ausgestattet ist, zu einer sogenannten Unterbremsung des Fahrzeuges (d.h. es wird Bremsweg verschenkt), da nicht nur am eptlasteten kurveninneren Vorderrad der Bremsdruck abgesenkt wird, sondern auch am belasteten kurvenäußeren Hinterrad.

Bei Zweikanal-ABS-Reglern, die während einer Regelung im geregelten Bremskanal auf einen flacheren Druckanstiegsgradienten umschalten, ist es notwendig, bei einseitiger Instabilität (d.h. ein Rad auf einer Seite des Fahrzeuges erreicht einen Schlupf bzw. eine Drehverzögerung, die eine Blockierneigung anzeigen), wie beispielsweise beim Bremsen auf unterschiedlichen Haftbeiwerten (z.B. eine Fahrzeugseite auf Wasser oder Eis, andere Fahrzeugseite auf guter Fahrbahn), auch den anderen (nicht geregelten) Bremskanal auf einen flachen Druckanstiegsgradienten umzuschalten, um zu vermeiden, daß plötzlich auf der linken und rechten Seite des Fahrzeuges stark unterschiedliche Bremsmomente auftreten, welche ein sogenanntes Giermoment erzeugen würden, so daß sich das Fahrzeug um die Hochachse drehen könnte.

In der oben geschilderten Bremssituation in einer Kurve wurde es aufgrund des Umschaltens auf eine flachen Druckanstiegsgradienten auch im keine Blockierneigung aufweisenden Bremskanal zu einer noch stärkeren Unterbremsung des Fahrzeuges kommen, da alle Bremsen mit dem flachen Druckaufbau beaufschlagt wurden.

Somit ergibt sich, daß bei einer ABS-Regelanlage gemäß dem Stand der Technik bei einer Kurvenfahrt erheblicher Bremsweg dadurch verschenkt werden kann, daß an einem kurveninneren Rad zu früh ein Bremsdruckabbau erfolgt.

Die Erfindung soll dem abhelfen. Ihr liegt also die Aufgabe zugrunde, ein Verfahren zum Regeln des Bremsdruckes in einer ABS-Anlage bereitzustellen, das auch bei extremer Kurvenfahrt und dabei möglicherweise durchdrehenden kurveninneren Rädern einen möglichst kurzen Bremsweg liefert.

Die erfindungsgemäße Lösung dieser Aufgabe ist im Patentanspruch 1 gekennzeichnet.

Erfindungsgemäß ist also zunächst vorgesehen, daß die Drehgeschwindigkeit eines Rades (mit dem hier das in Rede stehende kurveninnere Rad gemeint ist) mit der Drehgeschwindigkeit eines anderen Rades auf der anderen Fahrzeugseite verglichen wird. Aus diesem Vergleich ergeben sich über den Stand der Technik hinaus zusätzliche Bedingungen für die ABS-Regelung. Es versteht sich, daß es sich bei dem "einen Rad" um ein beliebiges Rad des Fahrzeuges handelt. Der erfindungsgemäße Regel-Algorithmus sieht vor, daß dann, wenn ein Rad einen vorgegebenen Schwellenwert bezüglich der Drehverzögerung überschreitet unter zumindest einer bestimmt ten Bedingung, die sich aus dem Vergleich der linken und rechten Fahrzeugräder ergibt, entgegen dem Normalfall der Bremsdruck noch nicht abgesenkt wird. Hierzu wird festgestellt, ob die Drehgeschwindigkeit des beobachteten Rades größer ist als die eines auf der anderen Seite des Fahrzeuges angeordneten Rades. Ist dies der Fall und dreht gleichzeitig auch das verglichene andere Rad mit einer Drehverzögerung, die noch unter dem Schwellenwert liegt (also keine Blockierneigung anzeigt), so erfolgt noch keine Absenkung des Bremsdruckes an dem einen Rad. Eine diesem Vorgang entsprechende Information wird aber abgespeichert. Das erfindungsgemäße Verfahren berücksichtigt also die Chronologie der Ereignisse.

Erfindungsgemäß ist weiter vorgesehen, daß an dem gebremsten Rad nur dann ein Druckabbau eingeleitet wird, wenn mindestens zwei Bedingungen erfüllt sind, namlich zum einen muß die Drehverzögerung des betroffenen Rades über dem vorgegebenen Schwellenwert liegen und zum anderen muß seine Drehgeschwindigkeit zumindest um einen vorgegebenen Differenzbetrag kleiner sein als diejenige eines anderen, auf der anderen Fahrzeugseite angeordneten Rades. Dabei wird aber vorausgesetzt, daß dieses andere Rad noch in stabilem Zustand läuft, d.h. keine Blockierneigung zeigt. Sobald auch das andere Rad Blockierneigung zeigt, d.h. seine Drehverzögerung den vorgegebenen Schwellenwert überschreitet, wird die zusätzliche Bedingung für einen Druckabbau an dem einen Rad aufgehoben, d.h. das eine Rad (wie auch das andere) wird in herkömmlicher Weise ABS-geregelt.

Mit der vorstehend beschriebenen Lösung werden jedoch nur solche Durchdrehvorgänge während einer Kurvenfahrt erfaßt, bei denen das kurveninnere Rad schneller dreht als das kurvenäußere Rad. Es ist jedoch auch möglich, daß der Durchdrehvorgang nicht so extrem ist und das kurveninnere Rad nur bis auf die Drehgeschwindigkeit des verglichenen kurvenäußeren Rades beschleunigt wird, nicht jedoch darüber hinaus.

In einem solchen Fall sieht die Erfindung einen anderen Algorithmus für die ABS-Regelung vor. Diese Variante ist im Patentanspruch 2 beschrieben. Eine Ergänzung findet sich im Anspruch 3.

Es versteht sich, daß die in den Ansprüchen 1 und 2 beschriebenen Lösungen zur Erzielung optimaler Ergebnisse bevorzugt miteinander kombiniert werden können.

Nachfolgend wird die Erfindung anhand der Zeichnung näher erläutert. Es zeigt:
- Fig. 1: schematisch den Verlauf der Drehgeschwindigkeiten zweier Räder, die auf gegenüberliegenden Fahrzeugseiten angeordnet sind, und
- Fig. 2: ein Blockschaltbild einer Schaltung zum Ausführen des erfindungsgemäßen Regel-Algorithmus.

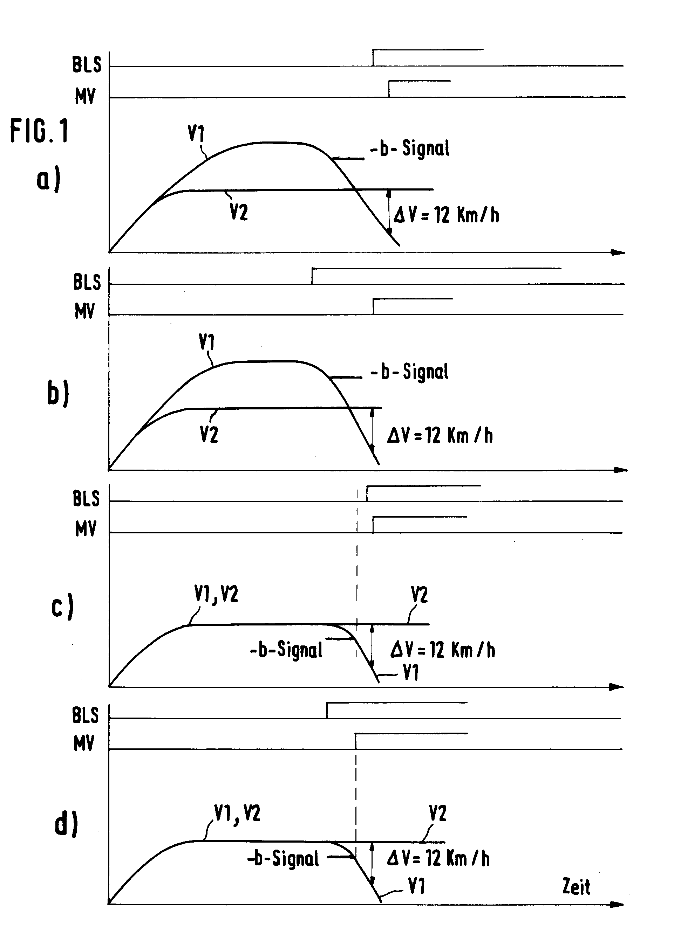

In Fig. 1a, b, c und d sind jeweils über einer gemeinsamen Zeit-Ordinate die Drehgeschwindigkeiten v₁, v₂ von zwei auf gegenüberliegenden Fahrzeugseiten angeordneten Rädern aufgetragen. Der Verlauf der Drehgeschwindigkeiten zeigt an, daß die Geschwindigkeit v₁ die des kurveninneren Rades ist.

Weiterhin sind in den Fig. 1a, b, c und d ein Bremslicht-Schaltersignal "BLS" und ein ein Öffnen des Magnetventils anzeigendes Signal "MV" aufgetragen. Das Signal "BLS" steht für eine Bremsbetätigung, die selbstverständlich auch anders ermittelt werden kann als über das Bremslicht. Mit anderen Worten: Wenn das Signal "BLS" in den von 0 verschiedenen Zustand übergeht, wird die Bremse betätigt. Das Signal "MV" zeigt an, daß ein Magnetventil am betroffenen Rad geöffnet wird, also ein Druckabbau im Zuge einer ABS-Regelung erfolgt.

Weiterhin ist in den Fig. 1a, b, c und d das sogenannte "-b-Signal" aufgetragen. Hierbei handelt es sich um den vorgegebenen Schwellenwert bezüglich der Drehverzögerung des Rades.

Die Fig. 1a und b zeigen den Fall, bei dem während einer Kurvenfahrt das kurveninnere Rad über die Geschwindigkeit des kurvenäußeren Rades durchdreht, d.h. die Drehgeschwindigkeit v₁ des kurveninneren Rades überschreitet deutlich die Drehgeschwindigkeit v₂ des kurvenäußeren Rades, wie dargestellt. Die Fig. 1a und 1b unterscheiden sich nur dadurch, daß bei Fig. 1a vorausgesetzt ist, daß die Bremsbetätigung deutlich später erfolgt als bei Fig. 1b, d.h. daß Signal "BLS" setzt in Fig. 1b noch vor dem Zeitpunkt ein, zu dem die Drehverzögerung des kurveninneren Rades (erste Ableitung der Drehgeschwindigkeit v₁) die Schwelle -b-Signal erreicht, während in Fig. 1a die Bremse erst nach diesem Zeitpunkt betätigt wird.

Da in beiden Fällen die Drehgeschwindigkeit v₁ des kurveninneren Rades die des kurvenäußeren Rades überschreitet, ist der Regelalgorithmus in beiden Fällen unabhängig vom Einsetzen des Bremslichtschalter-Signals "BLS". Der Bremsdruck am kurveninneren Rad wird noch nicht zu dem Zeitpunkt, an dem die Drehverzögerung den Schwellenwert erreicht (dieser Zeitpunkt ist in den Fig. "-b-Signal" bezeichnet), abgesenkt, sondern später, namlich zu dem Zeitpunkt, an dem die Drehgeschwindigkeit v₁ des kurveninneren Rades um einen vorgegebenen Differenzbetrag Δ v geringer ist als die Drehgeschwindigkeit v₂ des kurvenäußeren Rades. Dies ist in Fig. 1 dargestellt. Die Geschwindigkeitsdifferenz ist zum Beispiel auf 12 km/h gesetzt. Dann, wenn das kurveninnere Rad um diesen Betrag langsamer dreht als das kurvenäußere Rad, wird der Bremsdruck am kurveninneren Rad abgebaut, d.h. das Magnetventil zum Druckabbau geöffnet. Dies ist in den Figuren durch das Signal "MV" dargestellt. Dabei ist vorausgesetzt, daß das kurvenäußere Rad noch keine Blockierneigung anzeigt, also den Drehverzögerungsschwellenwert noch nicht erreicht hat. In den Figuren ist die Kurve v₂ entsprechend gezeichnet.

Der Verlauf der Drehgeschwindigkeiten der beiden verglichenen Räder in den Fig. 1c und 1d zeigt an, daß das kurveninnere Rad nicht über die Drehgeschwindigkeit des kurvenäußeren Rades durchdreht. Es dreht nur etwa soweit durch, daß die Drehgeschwindigkeiten v₁ und v₂ etwa gleich sind. In diesem Fall unterscheidet der erfindungsgemäß vorgesehene Regelalgorithmus unterschiedliche Situationen. Dann, wenn bei Beginn der Drehverzögerung die Bremse noch nicht betätigt ist (Fig. 1c, wo das Signal "BLS" später einsetzt), erfolgt noch kein Druckabbau, wenn die Drehgeschwindigkeit v₁ des kurveninneren Rades den Drehverzögerungsschwellenwert ("-b-Signal") erreicht hat, sondern erst später, namlich dann, wenn wiederum die Drehgeschwindigkeit v₁ des kurveninneren Rades um den vorgegebenen Differenzbetrag Δ v von beispielsweise 12 km/h geringer ist als die Drehgeschwindigkeit v₂ des kurvenäußeren Rades. Ist hingegen gemäß Fig. 1d bereits bei Beginn der Drehverzögerung des kurveninneren Rades die Bremse betätigt, setzt also das BLS-Signal zu diesem Zeitpunkt bereits ein, so erfolgt die Ansteuerung des Magnetventils direkt bei Erreichen der Drehverzögerungsschwelle -b. In herkömmlicher Weise wird also das Magnetventil sofort bei Erreichen des Schwellenwertes geöffnet und es wird nicht erst der Zeitpunkt abgewartet, zu dem das kurveninnere Rad um den vorgegebenen Differenzbetrag langsamer dreht als das andere Rad.

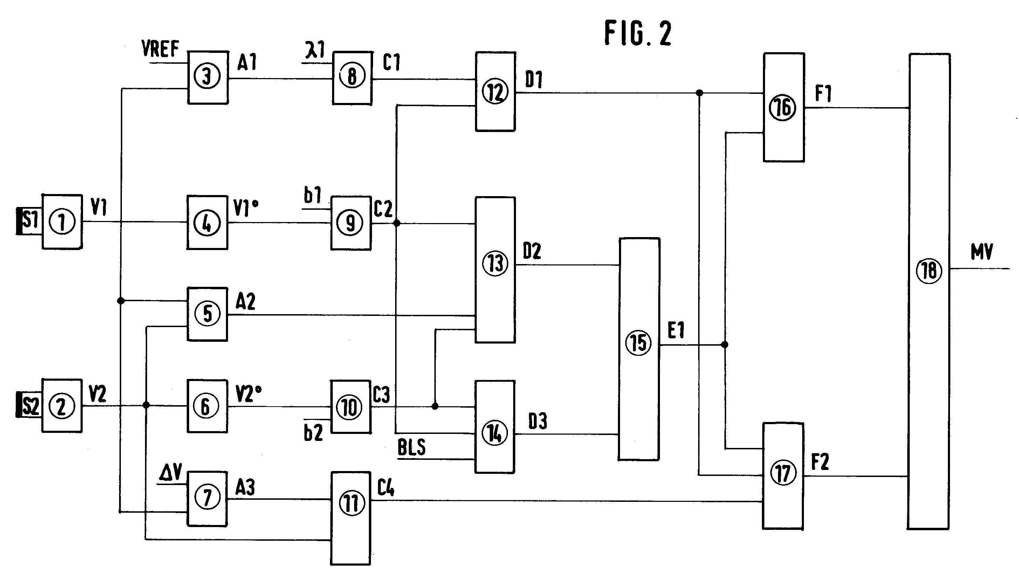

Fig. 2 zeigt ein Blockschaltbild eines Ausführungsbeispiels einer Vorrichtung zum Durchführen des vorstehend beschriebenen Regelalgorithmus. Es versteht sich, daß die Regelung auch mit Software durchgeführt werden kann.

In einem Prozessor werden Meßsignale eines an sich bekannten Rad-Drehgeschwindigkeitsensors in Geschwindigkeiten v₁ und v₂ umgerechnet. In diesem Beispiel stellt die Geschwindigkeit v₁ die Radgeschwindigkeit des kurveninneren Rades und v₂ die Geschwindigkeit des kurvenäußeren Rades dar.

Die derart ermittelten Geschwindigkeiten werden den Differenzierern 4 und 6 zugeführt, welche die Radbeschleunigungen v₁́ und v₂́ bilden. In dem Vergleicher 5 wird das Schaltsignal A₂ gebildet, wenn die Geschwindigkeit v₁ größer als die Geschwindigkeit v₂ ist.

In einem Subtrahierer 7 wird von der Geschwindigkeit v₁ eine Differenzgeschwindigkeit Δ v, die dem maximal möglichen Kurvenschlupf entspricht, abgezogen. Das derart gewonnene Geschwindigkeitssignal A₃ wird zusammen mit der Geschwindigkeit v₂ einem Vergleicher 11 zugeführt und erzeugt dort das Schaltsignal C₄, wenn die Geschwindigkeit v₂ größer als A₃ ist.

In einem Subtrahierer 3 wird aus der Fahrzeugreferenzgeschwindigkeit und der Radgeschwindigkeit v₁ der Radschlupf A₁ gebildet. In einem Vergleicher 8 wird dieses Schlupfsignal A₁ mit einem gegebenen Schwellwert λ verglichen und dann ein Schaltsignal C₁ erzeugt, wenn der Schwellwert vom Schlupfsignal erreicht wird.

Das Schaltsignal C₁ und das Schaltsignal C₂, welches ein Überschreiten eines Beschleunigungsschwellwertes signalisiert, bilden über die ODER-Stufe 12 das Schaltsignal D₁.

Die Schaltsignale C₂, A₂ und negiert C₃ werden in ein UND-Gatter 13 eingegeben. In einem zweiten UND-Gatter werden die Schaltsignale C₂ und negiert C₃ eingegeben und bilden zusammen mit dem negierten Bremslichtschaltersignal das Schaltsignal D₃. Die beiden Ausgänge dieser UND-Stufen D₂ und D₃ bilden über das ODER-Gatter 15 das Schaltsignal E₁. Das ODER-Gatter 15 ist als Speicherglied ausgeführt, hat also speichernde Wirkung. Das Schaltsignal E₁ wird mit einer logischen "1" von den Signalen MV oder negiert C₂ oder C₃ zurückgesetzt. Das Signal MV entspricht der Ansteuerung des Magnetventils.

In der UND-Stufe 16 wird das Schaltsignal F₁ erzeugt, wenn das Schaltsignal D₁ auf logischem "1"-Pegel und E₁ auf logischem "0"-Pegel liegt. Das Schaltsignal E₁ sperrt also mit einer logischen "1" die normale Ansteuerung, gibt aber mit dieser "1" einen anderen Ansteuerweg über F₂ frei, der mit der Zusatzbedingung C₄ versehen ist. Die Schaltsignale D₁, E₁ und C₄ führen in der UND-Stufe 17 zu einem Ausgangssignal F₂. Diese beiden Signale F₁ und F₂ bilden über die ODER-Stufe 18 das Signal zur Ansteuerung des Magnetventils am kurveninneren Rand.

## Patentansprüche

1. Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Drehverzögerung bei Überschreiten zumindest eines vorgegebenen Schwellenwertes der Bremsdruck normalerweise gesenkt und später wieder erhöht wird,
dadurch **gekennzeichnet,**
- daß weiterhin die Drehgeschwindigkeit eines Rades mit der Drehgeschwindigkeit eines anderen, auf der anderen Fahrzeugseite angeordneten Rades verglichen wird,
- daß dann, wenn die Drehverzögerung des einen Rades den vorgegebenen Schwellenwert (-b) überschreitet, aber seine Drehgeschwindigkeit großer ist als die des anderen Rades und die Drehverzögerung des anderen Rades unter dem Schwellenwert liegt, noch keine Absenkung des Bremsdruckes an dem einen Rad erfolgt und eine diesem Zustand entsprechende Information abgespeichert wird, und
- daß dann, wenn anschließend die Drehgeschwindigkeit des einen Rades um zumindest einen vorgegebenen Differenzbetrag (△ v) kleiner ist als die des anderen Rades, der Bremsdruck an dem einen Rad abgesenkt wird.

2. Verfahren zum Regeln des Bremsdruckes in einer blockiergeschützten Fahrzeugbremsanlage, bei dem das Drehverhalten eines gebremsten Rades gemessen und in Abhängigkeit von seinem Schlupf und/oder seiner Drehverzögerung bei überschreiten zumindest eines vorgegebenen Schwellenwertes der Bremsdruck normalerweise gesenkt und später wieder erhöht wird,
dadurch **gekennzeichnet,**
- daß weiterhin die Drehgeschwindigkeit eines Rades mit der Drehgeschwindigkeit eines anderen, auf der anderen Fahrzeugseite angeordneten Rades verglichen wird,
- daß dann, wenn bei Beginn der Drehverzögerung des einen Rades seines Drehgeschwindigkeit nicht größer ist als die des anderen Rades und keine Bremsbetätigung vorliegt und dieses Rad dann den Schwellenwert überschreitet, wobei nunmehr aber eine Bremsbetätigung vorliegen kann, noch keine Absenkung des Bremsdruckes an diesem Rad erfolgt, sofern das andere Rad den Schwellenwert noch nicht überschritten hat,
- daß dann, wenn anschließend die Drehgeschwindigkeit des einen Rades um zumindest einen vorgegebenen Differenzbetrag (△ v) kleiner ist als die des anderen Rades, der Bremsdruck an dem einen Rad abgesenkt wird.

3. Verfahren nach Anspruch 2,
dadurch **gekennzeichnet,**
daß dann, wenn bei Beginn der Drehverzögerung des einen Rades seine Drehgeschwindigkeit nicht größer ist als die des anderen Rades und eine Bremsbetätigung vorliegt, ein Bremsdruckabbau dann erfolgt, wenn dieses Rad den Schwellenwert erreicht.

4. Verfahren nach einem der vorhergehenden Ansprüche,
dadurch **gekennzeichnet,**
daß der vorgegebene Differenzbetrag der maximal möglichen Differenz der Drehgeschwindigkeiten des einen und des anderen Rades bei Kurvenfahrt entspricht.

## Claims

1. Method of regulating the braking pressure in an antilock vehicle brake system in which the rotational behaviour of a braked wheel is measured and in dependence upon its slip and/or its angular decleration on exceeding at least one predetermined threshold value the braking pressure is normally lowered and later then increased again,
characterized in
- that furthermore the rotational velocity of one wheel is compared with the rotational velocity of another wheel arranged on the other vehicle side,
- that when the angular deceleration of the one wheel exceeds the predetermined threshold value (-b) but its rotational velocity is greater than that of the other wheel and the angular deceleration of the other wheel lies beneath the threshold value, reduction of the braking pressure at the one wheel does not yet take place and information corresponding to this state is stored, and
- that when thereafter the rotational velocity of the one wheel is at least a predetermined differential amount (△v) smaller than that of the other wheel the braking pressure at the one wheel is lowered.

2. Method or regulating the braking pressure in an antilock vehicle brake system in which the rotational behaviour of a braked wheel is measured and in dependence upon its slip and /or its angular deceleration on exceeding at least one predetermined threshold value the braking pressure is normally lowered and later then increased again,
characteriezed in
- that furthermore the rotational velocity of one wheel is compared with the rotational velocity of another wheel arranged on the other vehicle side,
- that when at the start of the angular deceleration of the one wheel the rotational velocity thereof is not greater than that of the other wheel and no braking actuation is present and said wheel then exceeds the threshold value, a brake actuation then however possibly being present, a lowering of the braking pressure at said wheel is not yet effected if the other wheel has not yet exceeded the threshold value,
- that when thereafter the rotational velocity of the one wheel is at least a predetermined differential amount (△v) smaller than that of the other wheel the braking pressure at the other wheel is lowered.

3. Method according to claim 2,
characterized in
that when at the start of the rotational deceleration of the one wheel the rotational velocity thereof is not greater that that of the other wheel and a brake actuation is present a reduction in braking pressure takes place when said wheel reaches the threshold value.

4. Method according to any one of the preceding claims,
characterized in
that the predetermined difference amount corresponds to the maximum possible difference of the rotational velocities of the one and of the other wheel when negotiating a curve.

## Revendications

1. Procédé pour régler la pression de freinage dans une installation de freinage de véhicule automobile à antiblocage, selon lequel le comportement en rotation d'une roue freinée est mesuré et la pression de freinage est normalement réduite en fonction du glissement et/ou de la décélération en rotation de la roue, lors du dépassement d'au moins une valeur de seuil prédéterminée, puis est à nouveau accrue, caractérisé en ce
- qu'en outre la vitesse de rotation d'une roue est comparée à la vitesse de rotation d'une autre roue montée sur l'autre côté du véhicule,
- que, lorsque la décélération en rotation de la première roue dépasse la valeur de seuil prédéterminée (-b), mais que sa vitesse de rotation est supérieure à celle de l'autre roue et que la décélération en rotation de l'autre roue est inférieure à la valeur de seuil, aucune réduction de la pression de freinage n'est encore appliquée au niveau de la première roue et qu'une information correspondant à cet état est mémorisée, et
- que, lorsqu'ensuite la vitesse de rotation de la première roue est inférieure, au moins d'une différence prédéterminée (△v), à la vitesse de rotation de l'autre roue, la pression de freinage au niveau de la première roue est réduite.

2. Procédé pour régler la pression de freinage dans une installation de freinage de véhicule automobile à antiblocage, selon lequel le comportement en rotation d'une roue freinée est mesuré et la pression de freinage est normalement réduite en fonction du glissement et/ou de la décélération en rotation de la roue, lors du dépassement d'au moins une valeur de seuil prédéterminée, puis est à nouveau accrue, caractérisé en ce
- qu'en outre la vitesse de rotation d'une roue est comparée à la vitesse de rotation d'une autre roue disposée sur l'autre côté du véhicule,
- que, lorsqu'au début de la décélération en rotation de la première roue, sa vitesse de rotation n'est pas supérieure à celle de l'autre roue et qu'aucune action de freinage n est présente et que cette roue dépasse alors la valeur de consigne, auquel cas alors une action de freinage peut cependant exister, mais encore aucune réduction de la pression de freinage n'est exécutée au niveau de cette roue dans la mesure où l'autre roue n'a pas encore dépassé la valeur de seuil,
- que, lorsqu'ensuite la vitesse de rotation de la première roue est inférieure, au moins d'une différence prédéterminée (△v), à celle de l'autre roue, la pression de freinage au niveau de la première roue est réduite.

3. Procédé selon la revendication 2, caractérisé en ce que, lorsqu'au début de la décélération en rotation de la première roue, sa vitesse de rotation n'est pas supérieure à celle de l'autre roue et qu'il existe une action de freinage, une réduction de la pression de freinage est exécutée lorsque cette roue atteint la valeur de seuil.

4. Procédé selon l'une des revendications précédentes, caractérisé en ce qu'une différence prédéterminée correspond à la différence maximale possible entre les vitesses de rotation de la première roue et de l'autre roue lors du franchissement de courbes.
